(19) Europäisches Patentamt / European Patent Office / Office européen des brevets

(11) **EP 2 161 852 B1**

(12) **EUROPEAN PATENT SPECIFICATION**

(45) Date of publication and mention
of the grant of the patent:
**01.10.2014 Bulletin 2014/40**

(21) Application number: **07721101.9**

(22) Date of filing: **10.05.2007**

(51) Int Cl.:
**H04W 72/12** $^{(2009.01)}$

(86) International application number:
**PCT/CN2007/001528**

(87) International publication number:
**WO 2008/138164 (20.11.2008 Gazette 2008/47)**

(54) **METHOD FOR UPLINK TRANSMISSION SCHEDULING OF WIRELESS COMMUNICATION SYSTEM AND RELEVANT DEVICE**

VERFAHREN ZUM AUFWÄRTSSTRECKEN-ÜBERTRAGUNGS-SCHEDULING EINES DRAHTLOSEN KOMMUNIKATIONSSYSTEMS UND RELEVANTE EINRICHTUNG

PROCÉDÉ POUR PROGRAMMER LES TRANSMISSIONS DE LIAISON MONTANTE D'UN SYSTÈME DE COMMUNICATION SANS FIL ET DISPOSITIF ASSOCIÉ

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**10.03.2010 Bulletin 2010/10**

(73) Proprietor: **ALCATEL LUCENT**
**92100 Boulogne-Billancourt (FR)**

(72) Inventors:
• **LIU, Hao**
 **Shanghai 201206 (CN)**
• **SONG, Yang**
 **Shanghai 201206 (CN)**
• **ZHU, Xiaolong**
 **Shanghai 201206 (CN)**

(74) Representative: **Wetzel, Emmanuelle**
 **Alcatel-Lucent Deutschland AG**
 **Intellectual Property Business Group**
 **Lorenzstrasse 10**
 **70435 Stuttgart (DE)**

(56) References cited:
**WO-A1-2004/102891   WO-A1-2007/003034
CN-A- 1 685 631      CN-A- 1 748 383
CN-A- 1 773 885      US-A1- 2004 114 618
US-A1- 2004 165 676   US-A1- 2006 120 477**

**Description**

<u>Field of the Invention</u>

The present invention generally relates to a relay-based wireless communication system, and more particularly, relates to a method for scheduling uplink transmission in a relay-based wireless communication system and relevant devices.

<u>Background of the Invention</u>

Since 1990s, with the increasing demand on wireless access, particularly on broadband wireless access (BWA), the BWA technology has gained an expeditious development. The Institute of Electrical and Electronics Engineers (IEEE) has established an IEEE 802.16 Task Force to be dedicated to studying the specification for the Fixed Broadband Wireless Access technology, with an objective to establish a globally uniform BWA standard. In order to facilitate attainment of this objective, several worldwide-known enterprises have initiated and established a World Interoperability for Microwave Access (WiMAX) forum so as to strenuously promote this standard global wide.

Mobile Multi-hop Relay (MMR) is a new task force established by the IEEE on March 2006. The main objective of the task force is to define the multi-hop extension of the IEEE 802.16 so as to enable the WiMAX system to support the MMR. The objective of the MMR is to further increase the system throughput or extend the system coverage without affecting user devices. It requires that all modifications should be based on the IEEE 802.16e, and all modifications should be limited to base stations (BS) and relay stations (RS), and user devices of IEEE802.16e can not be modified. Since IEEE 802.16e only relates to a physical layer (PHY) and a media access control layer (MAC), all modifications are only performed in the two layers. The Project Authorization Requirement (PAR) of the MMR task force expressly stipulates that: (1) a relay station (RS) must be transparent to a terminal of a subscriber end; (2) a RS must be much smaller than a base station (BS); and (3) a multi-hop frame structure must be based on an Orthogonal Frequency Division Multiple Access (OFDM) technology.

In fact, for a mobile terminal (MT) at a subscriber end, introduction of RS results in the reduction of the channel distance between the BS and the MS, thus the MS can adopt a higher modulation and encoding scheme to thereby greatly improve the system capacitance.

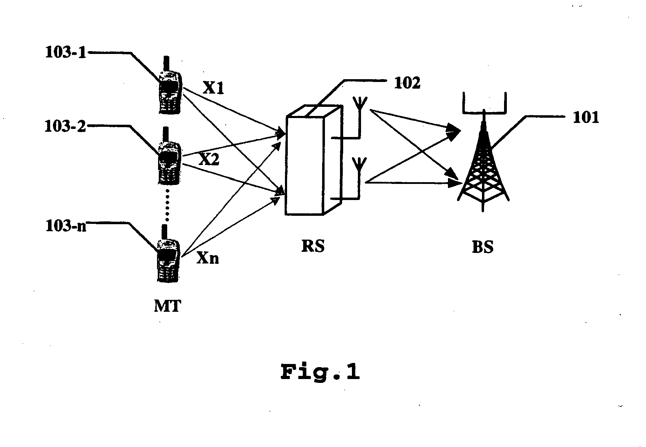

Fig. 1 shows an uplink transmission in a relay-based wireless communication system. In the relay-based wireless communication system as shown in Fig. 1, the mobile terminals MT 103-1, 103-2... 103-n transmit the uplink data streams in a fashion of Frequency Division Multiplexing (FDM) or Time Division Multiplexing (TD) to a BS 101 through a RS 102. Due to limitation of dimension, each mobile terminal MT may only have a single transmitting antenna and a single receiving antenna. The mobile terminal is not limited to a mobile station, which can also be any terminal device having a wireless communication functionality, such as a personal digital assistant (PDA), a pager, a laptop, a portable device, etc. For example, as shown in Fig. 1, there are n MTs connected to a same relay station RS 102, and in the uplink, they have their respective time or frequency resource. Thus, in a fashion of FDM or TDM, uplink data streams from different MTs can be distinguished at the receiver of the relay station RS 102 and/or base station BS 101. In order to reduce the transmission delay, 2-hop relay is generally adopted, with the first hop being from the mobile terminal MT to the relay station RS, and the second hop being from the relay station RS to the base station BS. However, a relay of more than 2 hops can also be used, i.e., there are more than one relay stations.

As far as the wireless communication system serving a number of mobile terminals MTs as shown in Fig. 1 is concerned, different mobile terminals MTs need to occupy different time or frequency resources, which will consume many precious radio resources. However, the uplink time or frequency resources are quite limited and such limitation on time cr frequency resources will limit the uplink capacity of the system.

US 2004/114618 A1 discloses creating a virtual MIMO transmission system using mobile terminals that have only one transmit path and antenna.

WO 2007/003034 A1 discloses a system and method of improvement of coverage in wireless systems with fixed infrastructure based relays wherein the relays are used to relay signals to multi-antenna receivers where the received signals are then processed using MIMO processing.

WO 2004/102891 A1 discloses interference cancellation in wireless relaying networks.

US 2004/165676 A1 discloses transmission schemes for multi-antenna communication systems utilizing multi-carrier modulation.

US 2006/120477 A1 discloses cooperative MIMO in multi-cell wireless networks.

<u>Summary of the Invention</u>

An objective of the present invention is to provide an effective solution which is capable of supporting multiple-user diversities at the mobile terminal side in a relay-based wireless network, i.e., implementing a virtual multiple input multiple output system between multiple-users by inter-user scheduling, to thereby improve the uplink capacity of the relay-based wireless communication system.

According to one aspect of the present invention, there is provided an uplink transmission scheduling method according to claim 1.

According to another aspect of the present invention, there is provided a base station device according to claim 9.

Preferred embodiments of the invention are disclosed in the dependent claims.

The solution of the present invention is combined with the advantage of the multi-user scheduling and MIMO preprocessing in the uplink of the relay-based wireless communication system. By channel estimation, the combination of users whose equivalent channels response are close to orthogonality is taken as a virtual MIMO combination, such that they transmit their own uplink data on a same time or frequency resource, which can effectively economize time or frequency resource without apparently reducing the system capacity when the radio resource of the system is scarce. In a preferred embodiment, the pre-encoding mechanism is introduced in the relay-based wireless communication system, so as to select a combination of users for which the equivalent channels experienced are more conformable to the requirement of orthogonality. In this way, the technical solution of the present invention is enabled to economize the radio resource of the system and meanwhile obtain proper quality of signal reception at the base station side.

Other features and advantages of the present invention will become clearer after reading the detailed description of the embodiments of the present invention with reference to the accompanying drawings.

## Brief Description of the Accompanying Drawings

Fig. 1 shows an uplink transmission in a relay-based wireless communication system;

Fig. 2 shows an uplink transmission in a relay-based wireless communication system according to an embodiment of the present invention;

Fig. 3 shows a structural block diagram of a base station device according to an embodiment of the present invention;

Fig. 4 shows a work flow chart of a base station according to an embodiment of the present invention;

Fig. 5 shows an uplink transmission in a relay-based wireless communication system according to another embodiment of the present invention;

Fig. 6 schematically shows a structural block diagram of a relay station device according to a further embodiment of the present invention;

Fig. 7 schematically shows a structural block diagram of a base station device according to a still further embodiment of the present invention;

Fig. 8 shows a work flow chart of a base station according to a yet further embodiment of the present invention.

## Best Mode for Carrying Out the Present Invention

Now, the present invention will be described with reference to the accompanying drawings, wherein throughout the whole text, same reference signs denote same or like devices.

Fig. 1 shows an uplink transmission in a relay-based wireless communication system, which has been described in the Background of the Invention.

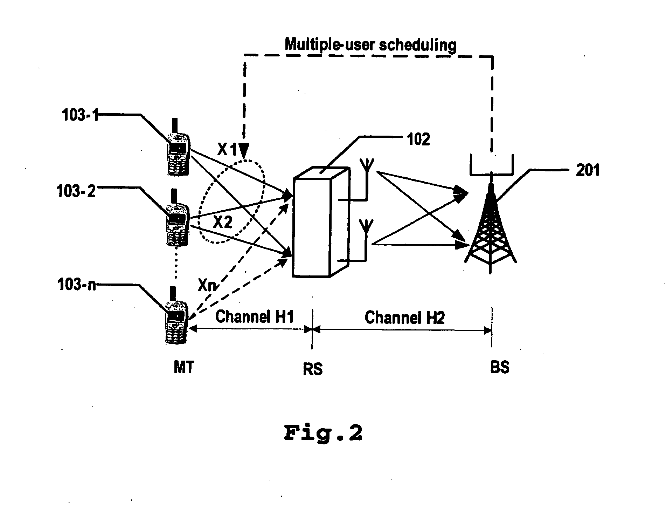

Fig. 2 shows an uplink transmission in a relay-based wireless communication system according to an embodiment of the present invention.

As shown in Fig. 2, the mobile terminals MTs 103-1, 103-2 ... 103-n transmit uplink data streams to a base station 101 through a relay station 102. Due to limitation of dimension in MT, each mobile terminal MT may only have a single transmitting antenna and a single receiving antenna. A base station 201 can schedule a plurality of (two or more) mobile terminals MTs to perform uplink transmission through a same sub-channel. In other words, the selected mobile terminals MTs are enabled to form a virtual Multiple Input Multiple Output (V-MIMO) system, so as to obtain the robustness of the wireless communication link and meanwhile improve throughput of the system by multiple-user diversity.

According to the technical solution of the present invention, the base station 201 can select a combination of mobile terminals for forming a V-MIMO based on channel variation, and these mobile terminals will be scheduled to perform uplink transmission on a same time or frequency resource. The relay station 102 receives uplink data from respective mobile terminal through receiving means (not shown) having a plurality of receiving antennas (Fig. 2 schematically shows two receiving antennas) and directly forward, after aggregation, them to the base station 201 through transmitting means having multiple receiving antennas (Fig. 2 schematically shows two receiving antennas) without performing any parsing. The base station 201 receives the uplink signal through receiving means having multiple receiving antennas (Fig. 2 schematically shows two receiving antennas) and parses the received uplink signal of the combination of V-MIMO users by spatial de-multiplexing.

In order that the base station 201 can correctly parse the uplink signal from those mobile terminals MTs which perform spatial multiplexing as the combination of V-MIMO users, it is necessary to enable the uplink channel responses for the combination of V-MIMO users to be orthogonal to the utmost. However, in the relay-based wireless communication system, the channel environment is quite complex and will vary with factors such as mobility of a mobile terminal. In the system as shown in Fig. 2, the channel response $H_1$ of the first hop from the mobile terminals MTs 103 to the relay station RS 102 is represented by formula (1), and the channel response $H_2$ of the second hop from the relay station RS 102 to the base station BS 201 is represented by formula (2).

$$H1 = \begin{bmatrix} h_{M-R}^{11} & h_{M-R}^{12} & \cdots & h_{M-R}^{1n} \\ h_{M-R}^{21} & h_{M-R}^{22} & \cdots & h_{M-R}^{2n} \end{bmatrix} \tag{1}$$

$$H2 = \begin{bmatrix} h_{R-B}^{11} & h_{R-B}^{12} \\ h_{R-B}^{21} & h_{R-B}^{22} \end{bmatrix} \tag{2}$$

Assume that the uplink data streams of the mobile terminals MT 103-1, 103-2,..., 103-n are X= $\{x_1, x_2, \cdots, x_n\}$, respectively, the data streams R received at the relay station RS 102 can be represented as:

$$R = H_1 X + N_1 = \begin{bmatrix} h_{M-R}^{11} & h_{M-R}^{12} & \cdots & h_{M-R}^{1n} \\ h_{M-R}^{21} & h_{M-R}^{22} & \cdots & h_{M-R}^{2n} \end{bmatrix} \begin{bmatrix} x_1 \\ x_2 \\ \vdots \\ x_n \end{bmatrix} + N_1$$

$$= \begin{bmatrix} h_{M-R}^{11} x_1 + h_{M-R}^{12} x_2 + \cdots + h_{M-R}^{1n} x_n \\ h_{M-R}^{21} x_1 + h_{M-R}^{22} x_2 + \cdots + h_{M-R}^{2n} x_n \end{bmatrix} + N_1 \tag{3}$$

Wherein $N_1$ indicates random noise sequences to which the signals in the first hop are subjected.

In the present embodiment, the relay station RS 102 directly relays the data streams R to the base station BS 201 without performing any processing, thus the data streams Y received at the base station BS 201 can be represented as:

$$Y = H_2 R + N_2 = H_2 H_1 X + N' \tag{4}$$

Wherein $N_2$ indicates random noise sequences to which the signals in the second hop is subjected, and N' indicates random noise sequences (including $H_2 N_1 + N_2$) to which the signals in the whole uplink are subjected.

From Formula (4), it is seen that if all currently active mobile terminals MT transmit predetermined pilot sequences which are orthogonal to each other, an equivalent uplink channel response H of the relay-based wireless communication system can be known at the base station BS 201 through channel estimation, i.e.,

$$H = H_2 H_1 \qquad\qquad (5)$$

wherein the $i_{th}$ row of H indicates an equivalent uplink response vector of the $i_{th}$ mobile terminal MT.

The BS 201 needs to calculate the orthogonality between the row vectors of H, select the users whose corresponding row vectors in H are closest to orthogonality with respect to each other as a combination of V-MIMO users, and schedule these user mobile terminals MTs to enable them to cooperatively transmit uplink data on the same time or frequency resource. Then, the BS 201 can parse the uplink signals of spatial multiplexing performed by the combination of V-MIMO users upon reception of the uplink data, to thereby obtain the uplink data for each user in the combination.

Here, it should be noted that the term "closest to orthogonality" can be defined that the dot product of two row vectors is closest to zero relative to the dot product between other vectors. In another example, it can also be defined as a predetermined threshold such that the dot product of two row vectors is smaller than the threshold, they can be regarded as "closest to orthogonality". The skilled in the art can define the term otherwise based on the actual need, whereas all such definitions belong to variations within the scope of the present invention.

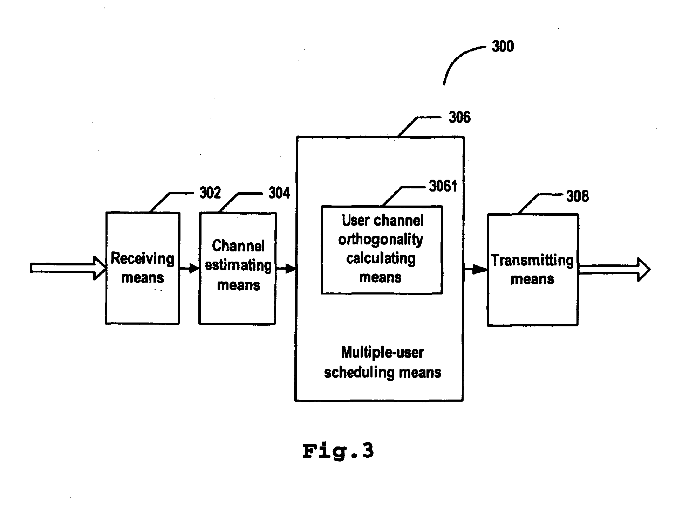

Fig. 3 schematically shows a structural block diagram of a base station device according to an embodiment of the present invention, wherein the reference number 300 denotes a base station device as shown in Fig. 2; the reference sign 302 denotes receiving means for receiving signals from the uplink through multiple antennas (not shown); the reference sign 304 denotes channel estimate means for channel estimation by using pilot sequences; the reference sign 306 denotes multi-user scheduling means for performing multi-user scheduling so as to enable each mobile terminal of the combination of V-MIMO users to cooperatively perform uplink transmission on the same time or frequency resource; the reference sign 308 denotes transmitting means for transmitting downlink scheduling signals.

As shown in Fig. 3, the base station 300 receives pilot signals from respective mobile terminals MTs by receiving means 302. The channel estimate means 304 performs channel estimation for each mobile terminal MT based on known pilot sequences and the received pilot signals, i.e., obtaining an equivalent channel response H. The performance of the channel estimate means 304 is known to the skilled in the art, thus detailed description thereof is omitted here. The multi-user scheduling means 306 comprises user channel orthogonality calculating means 3061 which determines the orthogonality of user equivalent channels by, for example, calculating the dot product of the row vectors of the equivalent channel response H. The multi-user scheduling means 306 may select users whose corresponding row vectors of H are closest to orthogonality with respect to each other as a combination of V-MIMO users and generate scheduling commands for corresponding mobile terminals MTs in the combination of V-MIMO users. The base station 300 transmit, only via the transmitting means 308, downlink scheduling commands to schedule the mobile terminals MTs in terms of the combination of V-MIMO users to cooperatively transmit uplink data on the same time or frequency resource.

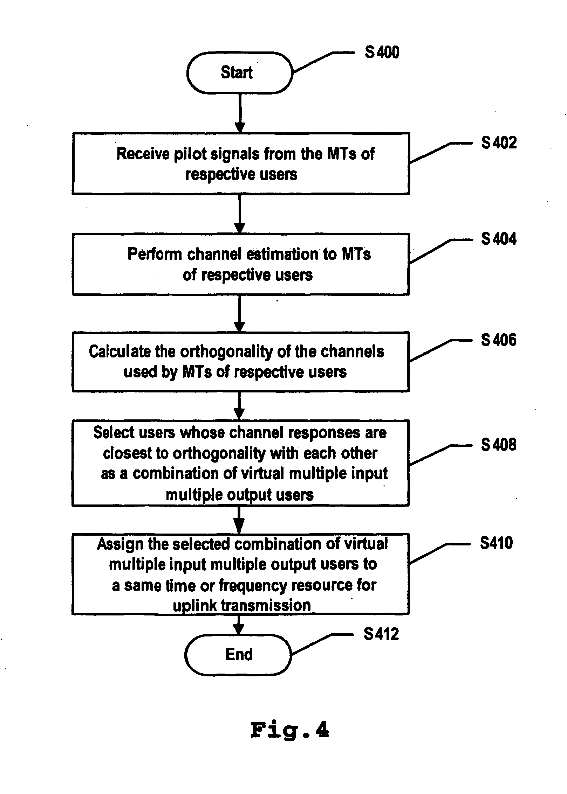

Fig. 4 shows a work flow chart of a base station according to an embodiment of the present invention;

As shown in Fig. 4, at step S400, the work flow starts.

At step S402, pilot signals from the mobile terminals MTs of respective users are received.

At step S404, based on the received pilot signals and the pilot sequences known in advance, the equivalent channel experienced by the mobile terminal MT of each user in the relay-based wireless communication system is estimated. As previously mentioned, various means of channel estimation are known to the skilled in the art, and the description thereof is thus omitted here.

At step S406, the orthogonality between the equivalent channels experienced by the mobile terminals MTs of the users in the relay-based wireless communication system is determined. For example, dot product operation can be performed between the row vectors in the estimated equivalent channel response matrix H to determine the orthogonality between the above equivalent channels.

At step S408, the users whose equivalent channel responses are closest to orthogonality are selected to be a combination of V-MIMO users. The "closest to orthogonality" for example can be defined as the dot product of two row vectors of H matrix being closest to zero with respect to the dot product between other vectors. In another example, there may be further provided a predetermined threshold, and when the dot product of two row vectors is less than the threshold, they can be regarded as "closest to orthogonality".

At step S410, each mobile terminal MT in the selected combination of V-MIMO users is assigned to a same time or frequency resource, i.e., performing uplink transmission on a same sub-channel.

At step S412, the working flow ends.

It should be appreciated that in actual radio transmission, the channel condition will change. Thus, the combination of V-MIMO users selected based on the embodiment of the present invention is not fixed either. When the channel condition changes, i.e., $H_1$ and $H_2$ change, the selected combination of V-MIMO users can be updated based on the result of the channel estimation so as to dynamically adapt to the channel variations.

In the above embodiment, if the orthogonality of the equivalent channel responses of the respective mobile terminals MTs in the selected combination of V-MIMO users is relatively poor, the V-MIMO detection performance at the base station side will be affected by a strong correlation between the MIMO channels, and thereby deteriorating the quality of the uplink data reception.

In another embodiment of the present invention, the above problem will be improved.

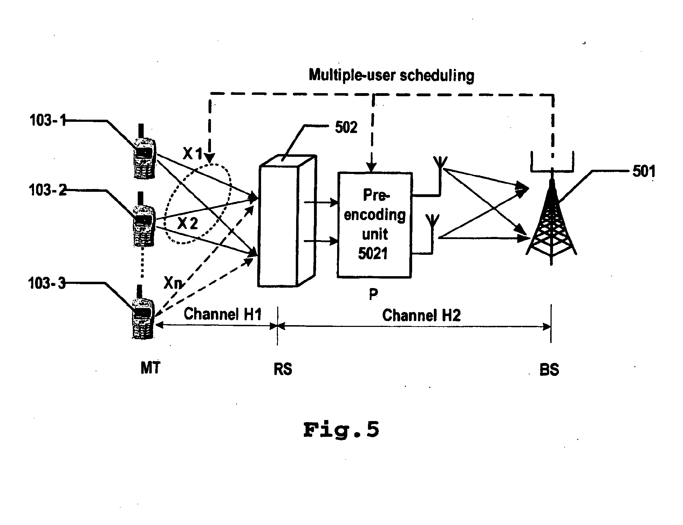

Fig. 5 shows an uplink transmission in a relay-based wireless communication system according to another embodiment of the present invention. The embodiment as shown in Fig. 5 is an improvement on the basis of the embodiment as shown in Fig. 2.

As shown in Fig. 5, the mobile terminals MTs 103-1, 103-2 ... 103-n transmit the uplink data streams to the base station 501 through a relay station RS 502. Likewise, each mobile terminal MT may only have a single transmitting antenna and a single receiving antenna, due to limitation of dimension in MT. A base station 401 schedules a plurality of (two or more) mobile terminals MTs in a similar manner as the base station 201 as described in Fig. 2 to perform uplink transmission over a same sub-channel. In order to solve the problem of poor orthogonality between equivalent channel responses, the relay station 502 preferably comprises pre-encoding means 5021. In Fig. 5, for the sake of clarity, the pre-encoding means 5021 is shown with a block independent of the relay station. However, the skilled in the art should appreciate that, for the convenience of maintenance and integration, the pre-encoding means 5021 is preferred to be integrated in the relay station device as a module. The pre-encoding means 5021 is scheduled by the base station BS 501 and selects, from pre-determined pre-encoding matrixes, a pre-encoding matrix which is introduced into the equivalent channel, so as to change the equivalent channel response.

In the system as shown in Fig. 5, the channel response $H_1$ of the first hop from the mobile terminals MTs 103 to the relay station RS 502 is expressed by formula (1), and the channel response $H_2$ of the second hop from the relay station RS 502 to the base station BS 501 is expressed by formula (2).

$$H1 = \begin{bmatrix} h_{M-R}^{11} & h_{M-R}^{12} & \cdots & h_{M-R}^{1n} \\ h_{M-R}^{21} & h_{M-R}^{22} & \cdots & h_{M-R}^{2n} \end{bmatrix} \tag{1}$$

$$H2 = \begin{bmatrix} h_{R-B}^{11} & h_{R-B}^{12} \\ h_{R-B}^{21} & h_{R-B}^{22} \end{bmatrix} \tag{2}$$

Assume that the uplink data streams of the mobile terminals MTs 103-1, 103-2,..., 103-n are X= $\{x_1, x_2, \cdots, x_n\}$, respectively, the data streams R received at the relay station RS 102 can be represented as:

$$R = H_1 X + N_1 = \begin{bmatrix} h_{M-R}^{11} & h_{M-R}^{12} & \cdots & h_{M-R}^{1n} \\ h_{M-R}^{21} & h_{M-R}^{22} & \cdots & h_{M-R}^{2n} \end{bmatrix} \begin{bmatrix} x_1 \\ x_2 \\ \vdots \\ x_n \end{bmatrix} + N_1$$

$$= \begin{bmatrix} h_{M-R}^{11} x_1 + h_{M-R}^{12} x_2 + \cdots + h_{M-R}^{1n} x_n \\ h_{M-R}^{21} x_1 + h_{M-R}^{22} x_2 + \cdots + h_{M-R}^{2n} x_n \end{bmatrix} + N_1 \tag{3}$$

Wherein $N_1$ indicates random noise sequences to which the signals in the first hop is subjected.

Since the pre-encoding means 5021 introduces the pre-encoding mechanism in the channel of the second hop from the relay station 502 to the base station BS 501, the data stream Y received at the base station BS 501 can be indicated as:

$$Y = H_2(PR) + N_2 = H_2 P(H_1 X + N_1) + N_2 = H_2 P H_1 X + N'' \tag{5}$$

wherein P indicates a pre-encoding matrix, $N_2$ indicates random noise sequences to which the signals in the second hop are subjected, and N" indicates random noise sequences to which the signals in the whole uplink are subjected after introducing the pre-encoding mechanism (including $H_2PN_1+N_2$).

From formula (5), it can be seen that the uplink equivalent channel response H of the relay-based wireless system after introducing the pre-encoding mechanism is changed as $H_2PH_1$. P matrix is selectable, introduction of which can change the equivalent channel response, thus the base station BS 501 can select, based on new equivalent channel responses, the users whose channel responses are closest to orthogonality, to thereby form a combination of V-MIMO users.

As previously mentioned, the pre-encoding matrix P for changing the equivalent channel response is selected from a predetermined pre-encoding set. This pre-encoding set can comprise a plurality of different pre-encoding matrixes. The base station BS 501 can schedule the pre-encoding means 5021 to attempt to introduce each pre-encoding matrix in the pre-encoding matrixes to the uplink of the system. The base station 501 calculates corresponding equivalent uplink channel response with respect to each pre-encoding matrix and determines which pre-encoding matrix enables to obtain the optimum orthogonality of the uplink channel responses between the current users (for example, the dot product of respective two rows of vectors in H matrix is less than the predetermined threshold, etc.). Then, the base station BS 501 on one hand schedules the pre-encoding means 5021 in the relay station RS 502 to selected the determined pre-encoding matrix, and on the other hand schedules the selected combination of V-MIMO users to perform uplink transmission on the same time or frequency resource. Thus, the problem of poor equivalent channel orthogonality of the mobile terminals MTs is solved to a great extent, and the quality of the uplink data reception is effectively guaranteed by improving the complexity of the system.

Particularly, the relay station-based wireless communication system as shown in Fig. 5 can adopt two kinds of implementations in the process of determining the pre-encoding matrix.

In a first implementation, each mobile terminal MT of 103-1, 103-2, ... 103-n is assigned to a different orthogonality pilot group in dependence on different pre-encoding matrix. Subsequently, the pre-encoding means 5021 in the relay station RS 502 introduces each pre-encoding matrix respectively into the uplink channel during a respective uplink transmission period, and the base station BS 501 receives all the respective groups of pilot signals of the mobile terminals MT 103-1, 103-2 ... 103-n. Thus, the base station BS 501 may distinguish the currently introduced pre-encoding matrix according to the current pilot groups.

In the other implementation, mobile terminals MTs 103-1, 103-2 ... 103-n are constantly assigned to same orthogonal pilots, whereas during the estimation process of respective user equivalent channel responses at the base station 501, the relay station 502 introduces, within the respective uplink transmission periods, the respective pre-encoding matrixes into the uplink channel in an order known to the base station BS 501. The base station BS 501 receives all pilot signals (with the number of G*n, wherein G is the number of pre-generated pre-encoding matrixes) from the mobile terminals MTs 103-1, 103-2, ... 103-n. Thus, the base station BS 501 distinguishes the currently introduced pre-encoding matrix based on the round of n pilots corresponding to n mobile terminals MTs 103-1, 103-2 ... 103-n.

Besides, the skilled in the art can actually understand that when the pre-encoding matrix P is selected as a unit matrix, the whole system will present the circumstance as shown in Fig. 2.

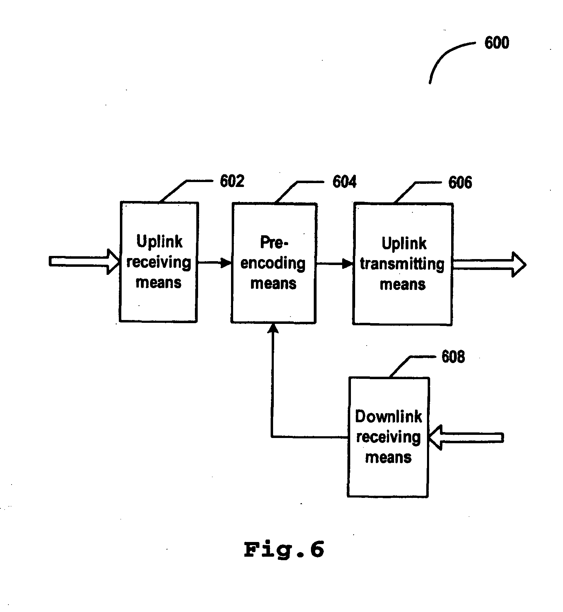

Fig. 6 schematically shows a block diagram of a relay station device according to a further embodiment of the present invention, wherein the reference sign 600 denotes a relay station device according to an embodiment of the present invention; the reference sign 602 denotes an uplink receiving means; the reference sign 604 denotes pre-encoding means such as the pre-encoding means 5021 as shown in Fig. 5; the reference sign 606 denotes an uplink transmitting means; and reference sign 608 denotes downlink receiving means.

As shown in Fig. 6, the uplink data transmitted by each user through its own mobile terminal MT is received by the uplink receiving means 602 of the relay station device 600, wherein the uplink receiving means 602 has a plurality of receiving antennas. Then, the pre-encoding means 604 performs pre-encoding processing to the received data, i.e., using the selected pre-encoding matrix P to process the received uplink data (see formula (5)). The pre-encoded uplink data is transmitted to the base station via the uplink transmitting means 606. The uplink transmitting means 606 may have a plurality of transmitting antennas. The downlink receiving means 608 receives a scheduling command from the base station and forwards the scheduling command to the corresponding processing means in the relay station device. For example, the base station can indicate the determined pre-encoding matrix P to the pre-encoding means 604, such that the pre-encoding means 604 performs pre-encoding processing on the received uplink data. During the estimation process of respective user equivalent channel responses at the base station, the pre-encoding means 604 respectively introduces, during the uplink transmission periods, pre-encoding matrixes from the pre-encoding matrix set into the uplink. In other words, the pre-encoding means 604 performs pre-encoding processing on the pilot signals transmitted by the mobile terminals by using respective pre-encoding matrix from the pre-encoding matrix set, during each uplink transmission period. Thus, the base station can use the received pilot signals to determine which pre-encoding matrix enables the users to satisfy the orthogonality requirement and selects a combination of V-MIMO users with respect to the determined pre-encoding matrix.

The function of the pre-encoding means 604 is similar to a matrix multiplier, which can be implemented by software, hardware or any combination of software and hardware known to the skilled in the art. The pre-encoding means 604 maintains a predetermined pre-encoding matrix set. Hereinafter, an algorithm for generating a pre-encoding matrix set comprising a plurality of pre-encoding matrixes is provided as an example, which, of course, can also be generated based on other algorithm.

Assume:

The pre-encoding matrix set F comprises G elements, F = $\{F_0, \cdots, F_{G-1}\}$

In the pre-encoding matrix set, the number of dimension of $g_{th}$ element $F_g$ is MxM, which can also be marked as M row vectors, for example $F_g = \left[ f_0^{(g)}, \cdots, f_{M-1}^{(g)} \right]$ . the $m_{th}$ row vector $f_{m-1}^{(g)}$ can also be generated with the following algorithm:

$$f_m^{(g)} = \frac{1}{\sqrt{M}} \begin{bmatrix} \omega_{0m}^{(g)} \\ \vdots \\ \omega_{(M-1)m}^{(g)} \end{bmatrix}$$

$$\omega_{nm}^{(g)} = \exp \left\{ j \frac{2\pi n}{M} \left( m + \frac{g}{G} \right) \right\}$$

The above pre-encoded matrix has the following characteristic:

$$F_g \{ F_g \}^H = \{ F_g \}^H F_g = I$$

For example: M=2, G=2

$$F = \left\{ F_0 = \frac{1}{\sqrt{2}} \begin{bmatrix} 1 & 1 \\ 1 & -1 \end{bmatrix}, F_1 = \frac{1}{\sqrt{2}} \begin{bmatrix} 1 & 1 \\ j & -j \end{bmatrix} \right\}$$

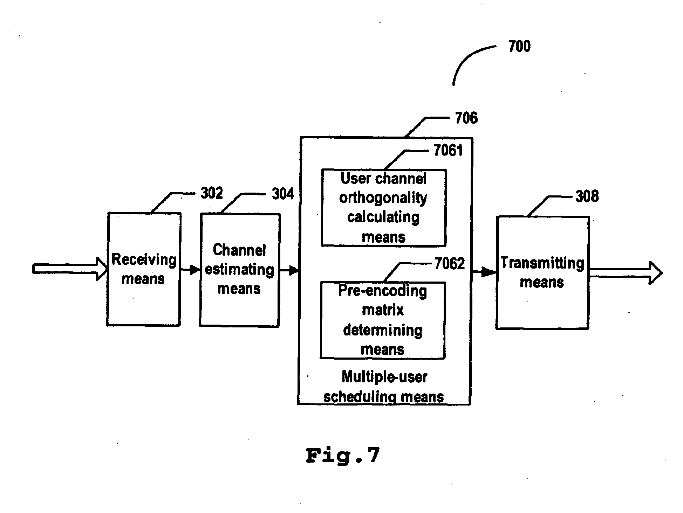

Fig. 7 schematically shows a block diagram of a base station device according to another embodiment of the present invention, wherein the receiving means 302, the channel estimating means 304 and the transmitting means 308 have same or similar functions as shown in Fig. 3. Improvement is made to the multiple-user scheduling means 706 in the base station means 700 according to the present embodiment, i.e., the multiple-user scheduling means 706 comprises user channel orthogonality calculating means 7061 and preferably comprises pre-encoding matrix determining means 7062.

As shown in Fig. 7, the base station 700 receives pilot signals from respective mobile terminals MTs via receiving means 302. The channel estimating means 304 performs channel estimation for respective mobile terminals MTs based on the know pilot sequences and the received pilot signals, i.e., achieving an equivalent channel response H. The orthogonality calculating means 7061 in the multiple-user scheduling means 706 determines the orthogonality of the user equivalent channels with respect to each pre-encoding matrix introduced at relay station side. Pre-encoding matrix determining means 7062 determines which pre-encoding matrix enables to obtain an optimum orthogonality of the user equivalent channel responses in the case of each pre-encoding martrix being selected respectively. The conditions for obtaining the optimum orthogonality can include, for example, enabling to combine basically orthogonally the maximum number of currently active users, or enabling the orthogonality of possible user combination to reach a predetermined threshold, etc. The skilled in the art can also define other criteria to determine the pre-encoding matrix to be employed. The multiple-user scheduling means 706 generates a scheduling command, scheduling on one hand pre-encoding means in the relay station to select a determined pre-encoding matrix, and scheduling on the other hand the selected combination of V-MIMO users to perform uplink transmission on the same time or frequency resource. Through the transmitting means 308, the base station 700 downlink transmits a scheduling command to schedule the mobile terminals MTs to transmit uplink data cooperatively in terms of the combination of V-MIMO users on the same time or frequency resource.

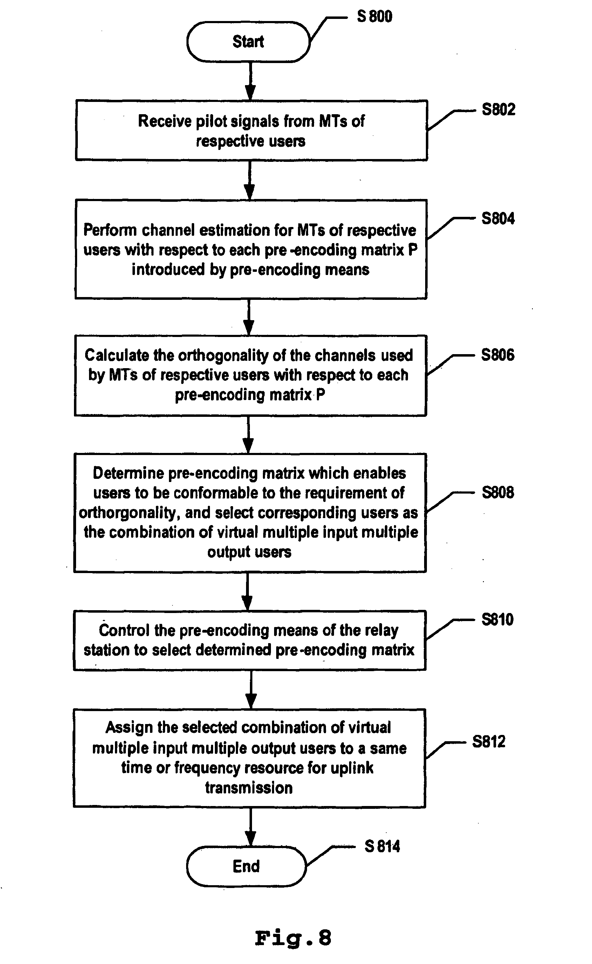

Fig. 8 shows a work flow chart of a base station according to a yet further embodiment of the present invention.

As shown in Fig. 8, at step S800, the work flow starts.

At step S802, pilot signals from the mobile terminals MTs of respective users are received.

At step S804, channel estimation is performed for the mobile terminal MTs of respective users with respect to each pre-encoding matrix P introduced by the pre-encoding means. As previously mentioned, various means for channel estimate are known to the skilled in the art, and the description thereof is thus omitted.

At step S806, the orthogonality of the channels used by the mobile terminals MTs of the users is calculated with respect to each pre-encoding matrix P. For example, the orthogonality of the above equivalent channels may be determined through dot production operation conducted between respective row vectors in the equivalent channel response matrix H which is estimated with respect to specific pre-encoding matrix P.

At step S808, the pre-encoding matrix which enables to obtain the optimum orthogonality of the uplink channels between the users is determined, and corresponding users are selected as the combination of V-MIMO users. The conditions for obtaining the optimum orthogonality can include, for example, enabling to combine substantially orthogonally the maximum number of currently active users, or enabling the orthogonality of possible user combination to reach predetermined threshold, etc. The skilled in the art can also define other criteria for determining the pre-encoding matrix to be employed.

At step S810, the pre-encoding means for the relay station is controlled to select the determined pre-encoding matrix.

At step S812, a same time or frequency resource is assigned to the members in the selected combination of V-MIMO users for uplink transmission, i.e., performing uplink transmission over the same sub-channel.

At step S814, the work flow ends.

It should be further noted that, in above description of the base station device and relay station device, the skilled in the art would appreciate that, for the sake of simplicity and convenience, functions and features in the base station device and relay station device (for example, transmitting/receiving antenna, power control module, etc) which do not fall within the scope of the present invention and are well-known to the skilled in the art are omitted, and such omission will not make the present invention unclear.

Respective means as shown in Figs. 3, 6, and 7 can be implemented as separate functional modules or combined into one or few functional modules or divided into more functional modules with single functions, wherein the functional modules can adopt an implementation of completely hardware, an implementation of completely software, or an implementation of comprising hardware and software units at the same time.

Respective steps as shown in Figs. 4 and 8 can be implemented in any order capable of implementing their combined functions, including serial implementation and parallel implementation.

Though the preferred embodiments of the present invention have been described with reference to the accompanying drawings, the skilled in the art can also make various alterations or modifications within the scope of the appended claims.

**Claims**

1. A method for scheduling uplink transmission in a relay-based wireless communication system, wherein mobile terminals (103-1, .., 103-n) transmit uplink data streams to a base station (201) through a relay station (102), comprising: estimating step (S404; S804) for estimating equivalent uplink channels of respective users associated with said mobile terminals (103-1, .., 103-n) whose uplink transmission is -performed via the same relay station (102) ; calculating step (S406; S806) for calculating orthogonality between the equivalent channels of said users; selecting step (S408; S808) for selecting a combination of virtual multiple input multiple output users from said users, wherein the equivalent channels of the users in said combination of virtual multiple input multiple output users is conformable to the requirement of orthogonality; and scheduling step for scheduling the respective users in said combination of virtual multiple input multiple output users to perform uplink transmission cooperatively with a same time or frequency resource.

2. A method according to claim 1, wherein:said estimating step (S404; S804) further includes estimating the equivalent uplink channels of the respective users with respect to each pre-encoding mechanism introduced at said relay station (102).

3.   A method according to claim 2, wherein: said calculate step (S406; S806) further includes calculating orthogonality between the equivalent channels of said users with respect to said each pre-encoding mechanism.

4.   A method according to claim 3, further comprising: determining step (S808) for determining a pre-encoring mechanism which enables to obtain the optimum orthogonality of the users in said combination of virtual multiple input multiple output users.

5.   A method according to claim 4, wherein: Said scheduling step further includes scheduling said relay station (102) to introduce the determined pre-encoding mechanism into the uplink when performing uplink transmission.

6.   A method according to any one of claims 1 to 5, wherein: said estimating step (S404; S804) includes estimating the equivalent uplink channel response matrix (H) by using the received pilot signals of said users and known pilot sequences.

7.   A method according to claim 6, wherein: said calculating step (S406; S806) includes calculating orthogonality between the equivalent channels of said users by performing dot product operation between respective row vectors in said equivalent channel response matrix (H).

8.   A method according to claim 7, wherein: in said selecting step (S408; S808), said requirement of orthogonality comprises: the dot product between row vectors corresponding to the users in said equivalent channel response matrix is closest to zero with respect to dot product of another row vectors corresponding to another user, or the dot product between row vectors corresponding to the users in said equivalent channel response matrix is less than a predetermined threshold.

9.   A base station device (201) for a relay-based wireless communication system, wherein mobile terminals (103-1, .., 103-n) transmit uplink data streams to a base station (201) through a relay station (102), said base station device (201) comprising: estimating means (304) for estimating equivalent uplink channels of respective users associated with said mobile terminals (103-1, .., 103-n) whose uplink transmission is -performed via the same relay station (102); calculating means (3061) for calculating orthogonality between the equivalent channels of said users; selecting means for selecting a combination of virtual multiple input multiple output users from said users, wherein the equivalent channels of the users in said combination of virtual multiple input multiple output users is conformable to the requirement of orthogonality; and scheduling means (306) for scheduling the respective users in said combination of virtual multiple input multiple output users to perform uplink transmission cooperatively with a same time or frequency resource.

10.  A base station device (201) according to claim 9, wherein: said estimating means (304) is further used for estimating the equivalent uplink channels of the respective users with respect to each pre-encoding mechanism introduced at said relay station (102).

11.  A base station device (201) according to claim 10, wherein: said calculating means (3061) is further used for calculating orthogonality between the equivalent channels of said users with respect to said each pre-encoding mechanism.

12.  A base station device (201) according to claim 11, further comprising: determining (7062) means for determining a pre-encoding mechanism which enables to obtain the optimum orthogonality of the users in said combination of virtual multiple input multiple output users.

13.  A base station device (201) according to claim 12, wherein: Said scheduling means (306) is further used for scheduling said relay station (102) to introduce the determined pre-encoding mechanism into the uplink when performing uplink transmission.

14.  A base station device (101) according to any one of claims 9 to 13, wherein: said estimating means (304) is used for estimating the equivalent uplink channel response matrix by using the received pilot signals of said users and known pilot sequences.

15. A base station device (101) according to claim 14, wherein: said calculating means (3061) is used for calculating orthogonality between the equivalent channels of said users by performing dot product operation between respective row vectors in said equivalent channel response matrix.

**Patentansprüche**

1. Verfahren zur Ablaufplanung einer Uplink-Übertragung in einem relaisbasierten drahtlosen Kommunikationssystem, wobei mobile Endgeräte (103-1, ..., 103-n) Uplink-Datenströme über eine Relaisstation (102) an eine Basisstation (201) übertragen, umfassend: einen Schätzungsschritt (S404; S804) zum Schätzen von äquivalenten Uplink-Kanälen jeweiliger mit den besagten mobilen Endgeräten (103-1, ..., 103-n) assoziierter Nutzer, deren Uplink-Übertragung über dieselbe Relaisstation (102) durchgeführt wird; einen Berechnungsschritt (S406; S806) zum Berechnen der Orthogonalität zwischen den äquivalenten Kanälen der besagten Nutzer; einen Auswahlschritt (S408; S808) zum Auswählen einer Kombination von virtuellen Mehrfacheingangs-Mehrfachausgangs-Nutzern unter den besagten Nutzern, wobei die äquivalenten Kanäle der Nutzer in der besagten Kombination von virtuellen Mehrfacheingangs-Mehrfachausgangs-Nutzern der Forderung nach Orthogonalität entsprechen; und einen Ablaufplanungsschritt zum Planen der jeweiligen Nutzer in der besagten Kombination von virtuellen Mehrfacheingangs-Mehrfachausgangs-Nutzern für das Durchführen einer kooperativen Uplink-Übertragung mit einer selben Zeit- oder Frequenzressource.

2. Verfahren nach Anspruch 1, wobei der besagte Schätzungsschritt (S404; S804) weiterhin das Schätzen der äquivalenten Uplink-Kanäle der jeweiligen Nutzer in Bezug auf jeden an der besagten Relaisstation (102) eingebundenen Vorcodierungs-Mechanismus umfasst.

3. Verfahren nach Anspruch 2, wobei der besagte Berechnungsschritt (S406; S806) weiterhin das Berechnen der Orthogonalität zwischen den äquivalenten Kanälen der besagten Nutzer in Bezug auf den besagten jeden Vorcodierungs-Mechanismus umfasst.

4. Verfahren nach Anspruch 3, weiterhin umfassend einen Ermittlungsschritt (S808) zum Ermitteln eines Vorcodierungs-Mechanismus, welcher es ermöglicht, die optimale Orthogonalität der Nutzer in der besagten Kombination von virtuellen Mehrfacheingangs-Mehrfachausgangs-Nutzern zu erzielen.

5. Verfahren nach Anspruch 4, wobei der besagte Ablaufplanungsschritt weiterhin die Planung der besagten Relaisstation (102) für das Einbinden des ermittelten Vorcodierungs-Mechanismus in den Uplink bei der Durchführung der Uplink-Übertragung umfasst.

6. Verfahren nach einem beliebigen der Ansprüche 1 bis 5, wobei der besagte Schätzungsschritt (S404; S804) das Schätzen der Antwortmatrix (H) des äquivalenten Uplink-Kanals unter Verwendung der empfangenen Pilotsignale der besagten Nutzer und von bekannten Pilotsequenzen umfasst.

7. Verfahren nach Anspruch 6, wobei der besagte Berechnungsschritt (S406; S806) das Berechnen der Orthogonalität zwischen den äquivalenten Kanälen der besagten Nutzer durch Durchführen einer Skalarproduktoperation zwischen jeweiligen Zeilenvektoren in der besagten Antwortnachricht (H) des äquivalenten Kanals umfasst.

8. Verfahren nach Anspruch 7, wobei in dem besagten Auswahlschritt (S408; S808) die besagte Forderung nach Orthogonalität umfasst: das Skalarprodukt zwischen den Nutzern in der besagten Antwortnachricht des äquivalenten Kanals entsprechenden Zeilenvektor liegt gegenüber dem Skalarprodukt eines anderen Zeilenvektors, welcher einem anderen Nutzer entspricht, am nächsten bei Null, oder das Skalarprodukt zwischen Zeilenvektoren, welche den Nutzern in der besagten Antworkmatrix des äquivalenten Kanals entspricht, liegt unter einem vorbestimmten Grenzwert.

9. Basisstationsvorrichtung (201) für ein relaisbasiertes drahtloses Kommunikationssystem, wobei mobile Endgeräte (103-1, ..., 103-n) Uplink-Datenströme über eine Relaisstation (102) an eine Basisstation (201) übertragen, wobei die besagte Basisstationsvorrichtung (201) umfasst: Schätzungsmittel (304) zum Schätzen von äquivalenten Uplink-Kanälen jeweiliger mit den besagten mobilen Endgeräten (103-1, ..., 103-n) assoziierten Nutzer, deren Uplink-Übertragung über dieselbe Relaisstation (102) durchgeführt wird; Berechnungsmittel (3061) zum Berechnen der Orthogonalität zwischen den äquivalenten Kanälen der besagten Nutzer; Auswahlmittel zum Auswählen einer Kombination von virtuellen Mehrfacheingangs-Mehrfachausgangs-Nutzern unter den besagten Nutzern, wobei die äquivalenten Kanäle der Nutzer in der besagten Kombination von virtuellen Mehrfacheingangs-Mehrfachausgangs-Nutzern der Forderung nach Orthogonalität entsprechen; und Ablaufplanungsmittel (306) zum Planen der jeweiligen Nutzer in der besagten Kombination von virtuellen Mehrfacheingangs-Mehrfachausgangs-Nutzern für das Durchführen einer kooperativen Uplink-Übertragung mit einer selben Zeit- oder Frequenzressource.

10. Basisstationsvorrichtung (201) nach Anspruch 9, wobei das besagte Schätzungsmittel (304) weiterhin für das Schätzen der äquivalenten Uplink-Kanäle der jeweiligen Nutzer in Bezug auf jeden an der besagten Relaisstation (102) eingebundenen Vorcodierungs-Mechanismus umfasst.

11. Basisstationsvorrichtung (201) nach Anspruch 10, wobei das besagte Berechnungsmittel (3061) weiterhin für das Berechnen der Orthogonalität zwischen den äquivalenten Kanälen der besagten Nutzer in Bezug auf den besagten jeden Vorcodierungs-Mechanismus verwendet wird.

12. Basisstationsvorrichtung (201) nach Anspruch 11, weiterhin umfassend ein Ermittlungsmittel (7062) zum Ermitteln eines Vorcodierungs-Mechanismus, welcher es ermöglicht, die optimale Orthogonalität der Nutzer in der besagten Kombination von virtuellen Mehrfacheingangs-Mehrfachausgangs-Nutzern zu erzielen.

13. Basisstationsvorrichtung (201) nach Anspruch 12, wobei das besagte Ablaufplanungsmittel (306) weiterhin zur Planung der besagten Relaisstation (102) für das Einbinden des ermittelten Vorcodierungs-Mechanismus in den Uplink bei der Durchführung der Uplink-Übertragung verwendet wird.

14. Basisstationsvorrichtung (201) nach einem beliebigen der Ansprüche 9 bis 13, wobei das besagte Schätzungsmittel (304) für das Schätzen der Antwortmatrix des des äquivalenten Uplink-Kanals unter Verwendung der empfangenen Pilotsignale der besagten Nutzer und von bekannten Pilotsequenzen verwendet wird.

15. Basisstationsvorrichtung (201) nach Anspruch 14, wobei das besagte Berechnungsmittel (3061) für das Berechnen der Orthogonalität zwischen den äquivalenten Kanälen der besagten Nutzer durch Durchführen einer Skalarprodukt-Operation zwischen jeweiligen Zeilenvektoren in der besagten Antwortmatrix des äquivalenten Kanals verwendet wird.

## Revendications

1. Procédé de planification d'une transmission de liaison montante dans un système de communication sans fil à relais, dans lequel des terminaux mobiles (103-1, .., 103-n) transmettent des flux de données montantes à une station de base (201) par l'intermédiaire d'une station relais (102), comprenant: une étape d'estimation (S404 ; S804) pour estimer des canaux de liaison montante équivalents d'utilisateurs respectifs associés auxdits terminaux mobiles (103-1, .., 103-n) dont la transmission de liaison montante est réalisée par l'intermédiaire de la même station relais (102) ; une étape de calcul (S406 ; S806) pour calculer l'orthogonalité entre les canaux équivalents desdits utilisateurs ; une étape de sélection (S408 ; S808) pour sélectionner une combinaison d'utilisateurs virtuels à entrées multiples sorties multiples parmi lesdits utilisateurs, dans lequel les canaux équivalents des utilisateurs dans ladite combinaison d'utilisateurs virtuels à entrées multiples sorties multiples sont conformes à l'exigence d'orthogonalité ; et une étape de planification pour planifier les utilisateurs respectifs dans ladite combinaison d'utilisateurs virtuels à entrées multiples sorties multiples pour réaliser une transmission de liaison montante de manière coopérative avec une même ressource de temps ou de fréquence.

2. Procédé selon la revendication 1, dans lequel : ladite étape d'estimation (S404 ; S804) comprend en outre l'estimation des canaux de liaison montante équivalents des utilisateurs respectifs par rapport à chaque mécanisme de précodage introduit au niveau de ladite station relais (102).

3. Procédé selon la revendication 2, dans lequel : ladite étape de calcul (S406 ; S806) comprend en outre le calcul de l'orthogonalité entre les canaux équivalents desdits utilisateurs par rapport à chacun desdits mécanismes de précodage.

4. Procédé selon la revendication 3, comprenant en outre : une étape de détermination (S808) pour déterminer un mécanisme de précodage qui permet d'obtenir l'orthogonalité optimale des utilisateurs dans ladite combinaison d'utilisateurs virtuels à entrées multiples sorties multiples.

**5.** Procédé selon la revendication 4, dans lequel: ladite étape de planification comprend en outre la planification de ladite station relais (102) pour introduire le mécanisme de précodage déterminé dans la liaison montante au moment de réaliser une transmission de liaison montante.

**6.** Procédé selon l'une quelconque des revendications 1 à 5, dans lequel : ladite étape d'estimation (S404 ; S804) comprend l'estimation de la matrice de réponse de canaux de liaison montante équivalents (H) en utilisant les signaux pilotes reçus desdits utilisateurs et séquences pilotes connues.

**7.** Procédé selon la revendication 6, dans lequel : ladite étape de calcul (S406 ; S806) comprend le calcul de l'orthogonalité entre les canaux équivalents desdits utilisateurs en effectuant une opération de produit scalaire entre des vecteurs lignes respectifs dans ladite matrice de réponse de canaux équivalents (H).

**8.** Procédé selon la revendication 7, dans lequel : dans ladite étape de sélection (S408 ; S808), ladite exigence d'orthogonalité comprend : le produit scalaire entre des vecteurs lignes correspondant aux utilisateurs dans ladite matrice de réponse de canaux équivalents est le plus proche de zéro par rapport au produit scalaire d'autres vecteurs lignes correspondant à un autre utilisateur, ou le produit scalaire entre des vecteurs lignes correspondant aux utilisateurs dans ladite matrice de réponse de canaux équivalents est inférieur à un seuil prédéterminé.

**9.** Dispositif de station de base (201) pour un système de communication sans fil à relais, dans lequel des terminaux mobiles (103-1, .., 103-n) transmettent des flux de données montantes à une station de base (201) par l'intermédiaire d'une station relais (102), ledit dispositif de station de base (201) comprenant : des moyens d'estimation (304) pour estimer des canaux de liaison montante équivalents d'utilisateurs respectifs associés auxdits terminaux mobiles (103-1, .., 103-n) dont la transmission de liaison montante est réalisée par l'intermédiaire de la même station relais (102) ; des moyens de calcul (3061) pour calculer l'orthogonalité entre les canaux équivalents desdits utilisateurs ; des moyens de sélection pour sélectionner une combinaison d'utilisateurs virtuels à entrées multiples sorties multiples parmi lesdits utilisateurs, dans lequel les canaux équivalents des utilisateurs dans ladite combinaison d'utilisateurs virtuels à entrées multiples sorties multiples sont conformes à l'exigence d'orthogonalité ; et des moyens de planification (306) pour planifier les utilisateurs respectifs dans ladite combinaison d'utilisateurs virtuels à entrées multiples sorties multiples pour réaliser une transmission de liaison montante de manière coopérative avec une même ressource de temps ou de fréquence.

**10.** Dispositif de station de base (201) selon la revendication 9, dans lequel : lesdits moyens d'estimation (304) sont en outre utilisés pour estimer les canaux de liaison montante équivalents des utilisateurs respectifs par rapport à chaque mécanisme de précodage introduit au niveau de ladite station relais (102).

**11.** Dispositif de station de base (201) selon la revendication 10, dans lequel : lesdits moyens de calcul (3061) sont en outre utilisés pour calculer l'orthogonalité entre les canaux équivalents desdits utilisateurs par rapport à chacun desdits mécanismes de précodage.

**12.** Dispositif de station de base (201) selon la revendication 11, comprenant en outre : des moyens de détermination (7062) pour déterminer un mécanisme de précodage qui permet d'obtenir l'orthogonalité optimale des utilisateurs dans ladite combinaison d'utilisateurs virtuels à entrées multiples sorties multiples.

**13.** Dispositif de station de base (201) selon la revendication 12, dans lequel : lesdits moyens de planification (306) sont en outre utilisés pour planifier ladite station relais (102) pour introduire le mécanisme de précodage déterminé dans la liaison montante au moment de réaliser une transmission de liaison montante.

**14.** Dispositif de station de base (201) selon l'une quelconque des revendications 9 à 13, dans lequel : lesdits moyens d'estimation (304) sont utilisés pour estimer la matrice de réponse de canaux de liaison montante équivalents en utilisant les signaux pilotes reçus desdits utilisateurs et séquences pilotes connues.

**15.** Dispositif de station de base (201) selon la revendication 14, dans lequel : lesdits moyens de calcul (3061) sont utilisées pour calculer l'orthogonalité entre les canaux équivalents desdits utilisateurs en effectuant une opération de produit scalaire entre des vecteurs lignes respectifs dans ladite matrice de réponse de canaux équivalents.

**Fig.1**

**Fig.2**

Fig.3

Start — S400

Receive pilot signals from the MTs of respective users — S402

Perform channel estimation to MTs of respective users — S404

Calculate the orthogonality of the channels used by MTs of respective users — S406

Select users whose channel responses are closest to orthogonality with each other as a combination of virtual multiple input multiple output users — S408

Assign the selected combination of virtual multiple input multiple output users to a same time or frequency resource for uplink transmission — S410

End — S412

Fig.4

**Fig.5**

600

602    604    606

| Uplink receiving means | Pre-encoding means | Uplink transmitting means |

608

Downlink receiving means

**Fig.6**

700

706

7061

User channel
orthogonality
calculating
means

302

304

Receiving
means

Channel
estimating
means

7062

Pre-encoding
matrix
determining
means

Multiple-user
scheduling means

308

Transmitting
means

**Fig.7**

S 800

Start

S802

Receive pilot signals from MTs of respective users

S804

Perform channel estimation for MTs of respective users with respect to each pre -encoding matrix P introduced by pre-encoding means

S806

Calculate the orthogonality of the channels used by MTs of respective users with respect to each pre-encoding matrix P

S808

Determine pre-encoding matrix which enables users to be conformable to the requirement of orthorgonality, and select corresponding users as the combination of virtual multiple input multiple output users

S810

Control the pre-encoding means of the relay station to select determined pre -encoding matrix

S812

Assign the selected combination of virtual multiple input multiple output users to a same time or frequency resource for uplink transmission

S 814

End

Fig.8

**EP 2 161 852 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004114618 A1
- WO 2007003034 A1
- WO 2004102891 A1
- US 2004165676 A1
- US 2006120477 A1